# EUROPEAN PATENT SPECIFICATION

(11) **EP 2 301 000 B1**
(45) Date of publication and mention of the grant of the patent: **10.08.2016**
(21) Application number: 09767100.2
(22) Date of filing: 19.06.2009
(51) Int. Cl.: G08G 1/00, G08G 1/14, H04W 4/04

(54) **PARKING LOCATOR SYSTEM INCLUDING VEHICLE AND USER IDENTIFIERS**
PARKLOKALISIERERSYSTEM, EINSCHLIESSLICH FAHRZEUG- UND BENUTZERKENNUNGEN
SYSTÈME DE LOCALISATION DE PLACE DE STATIONNEMENT

(30) Priority: 19.06.2008 WO PCT/US2008/007727; 23.10.2008 US 197214
(43) Date of publication of application: 30.03.2011
(73) Proprietor: Societe Stationnement Urbain Developpements et Etudes (SUDE SAS), 06000 Nice (FR)
(72) Inventor: Rick Rowe, Las Vegas, Nevada 89135 (US); Jean-Louis Fiorucci, 06000 Nice (FR)
(74) Representative: Greenwood, Matthew David
(86) International application number: PCT/US2009/003682
(87) International publication number: WO 2009/154787

(56) References cited:
- KR-A- 20070 091 704
- KR-A- 20070 092 548
- KR-B1- 100 778 618
- US-A1- 2004 252 034
- US-A1- 2005 159 863
- US-A1- 2005 280 555
- US-A1- 2006 187 043
- US-A1- 2006 250 278
- US-A1- 2008 030 373

## Description

### BACKGROUND OF THE INVENTION

### 1. Cross-Reference to Related Applications.

This application claims priority to PCT Application No. PCT/US08/07727, filed June 19, 2008, and U.S. Provisional Patent Application No. 61/197,214, filed October 23, 2008.

### 2. Field of the Invention.

The invention relates to a method and system for determining the status of vehicle parking, including the location of available vehicle parking.

### 3. Related Art.

Locating parking is a big problem in cities all around the world. As drivers search for a parking space, they waste gas, waste time and add to the traffic problems of big cities. The frustration of the search for a parking spot creates stress for those drivers that must frequent big cities for their jobs. Health problems have been linked to high levels of stress.

US 2005/0280555 discloses a dynamic parking locator system comprising a plurality of parking locators with transceivers configured to communicate parking space information and a server receiving and transmitting this parking space information regarding estimated available parking spaces at their destination location to users.

Thus, what is desired and disclosed herein is an apparatus, system and method to optimize the search for a parking space and reduce the time searching and the amount of energy wasted.

### SUMMARY OF THE INVENTION

In the light of the foregoing background, the present invention provides a parking locator system according to claim 1. Further advantageous embodiments arise from the dependent claims.

In one embodiment, the parking locator comprises at least one sensor configured to detect the present of an object at a parking space, and at least one transmitter for transmitting sensor information to one or more other devices.

In one embodiment, the parking locator comprises a body for supporting the one or more sensors and other elements of the locator. The body may be configured to be self-supporting, or be configured to be supported by another element, such as by conforming to at least a portion of a parking header. The one or more sensors may be secured to the body.

The parking locator may further comprise a logic device in electrical contact with the sensors. The logic device may be configured to communicate the presence of a vehicle within a parking space to an external device when one or more of the sensors detect the presence of an object within the parking space. The logic device may also be configured to communicate the absence of a vehicle within the parking space to an external device when none of the sensors detect the presence of an object within the parking space.

The logic device may have various configurations. In one embodiment, the logic device comprises one or more sensor inputs configured to receive sensor information from the sensors, a processor configured to determine the presence of a vehicle within the parking space based on the sensor information and generate parking information accordingly, and a wired or wireless transceiver configured to communicate parking information to one or more external devices. It is noted that parking information will generally comprise information indicating the presence or absence of a vehicle within the parking space, and that the processor will determine that a vehicle is present within the parking space when one or more of the sensors detect the presence of an object within a parking space.

The parking locator may communicate via its logic device in various ways. For example, the logic device may be configured to communicate wirelessly, such as by, but not limited to, GPRS communication.

The parking locator may have different sensor configurations. For example, the parking locator may have sensors selected from the group consisting of acoustic, electromagnetic, radio frequency, light, and motion sensors. The sensors may be secured to the body by one or more pivoting mounts, along the length of the body, or both.

It is contemplated that the parking locator may be used with a variety of parking spaces. Thus, in one embodiment, the parking locator's body is configured to substantially conform to at least a portion of a curb rather than a parking header. Also, the body may be planar in shape to allow the parking locator to be installed or attached to planar surfaces of a parking space such as but not limited to the parking space itself or a wall.

A parking locator system is also disclosed. In one embodiment, the parking locator system comprises one or more clusters comprising a control box configured to communicate parking information comprising information indicating the presence or absence of a vehicle within one or more parking spaces to an external device, and one or more parking locators configured to generate the parking information and communicate the parking information to the control box. In one or more embodiments, the parking locator system's clusters may be associated with one or more parking areas selected from the group consisting of parking garages, parking lots, and one or more city blocks.

In the parking locator system, the one or more parking locators may comprise a body, one or more sensors configured to detect the presence of an object within a parking space and secured to the body, and a logic device in electrical contact with the one or more sensors. The logic device may be configured to generate the parking information comprising information indicating the presence of a vehicle within the parking space when one or more of the sensors detect the presence of an object within the parking space. Also, the logic device may be configured to generate parking information comprising information indicating the absence of a vehicle within the parking space when none of the sensors detect the presence of an object within the parking space.

The parking locators may be connected and configured to communicate with the control box in various ways. For example, the parking locators may be configured to wirelessly communicate parking information to the control box. In addition, the parking locators may be connected in a daisy chain to the control box by one or more electrical cables selected from the group consisting of communications cables and power cables. When in a daisy chain configuration, the control box may further comprise a power distributor connected to an external power source and configured to power the parking locators through the electrical cables. It is noted that the control box may be configured to communicate in various ways as well. For example, the control box may communicate parking information to an external device via text messaging, GPRS, or both.

A location server may be provided in some embodiments of the parking locator system. Generally, the location server is a computer or other device capable of organizing and storing the parking information from a plurality of the one or more clusters, and configured to communicate the parking information to one or more user devices. In these embodiments, the control box for each of the one or more clusters may be configured to communicate the parking information to the location server. The location server may then organize and store the parking information as well as communicate the parking information to user devices. User devices may be PDAs, cell phones, GPS units, or other devices capable of displaying or presenting parking information to a user.

The location server may be configured to communicate the parking information in response to a request for the parking information from the one or more user devices, or to communicate the same in real-time. Similar to the above elements of the invention, the location server may communicate parking information in various ways such as but not limited to text messaging or GPRS. It is noted that in one or more embodiments, the parking locator system may be configured to collect a fee prior to communicating parking information to the one or more user devices.

In one embodiment, users and vehicles may be identified by the system. For example, vehicles may have identification tags. The system may detect tagged vehicles, such as for automatically charging users for parking and toll fees. In addition, subscribed users may be automatically provided with traffic, parking and other information. User identification and related information may also be utilized to form car-pools and social networks, and vehicle information may be used to locate such users.

Other systems, methods, features and advantages of the invention will be or will become apparent to one with skill in the art upon examination of the following figures and detailed description. It is intended that all such additional systems, methods, features and advantages be included within this description, be within the scope of the invention, and be protected by the accompanying claims.

### BRIEF DESCRIPTION OF THE DRAWINGS

The components in the figures are not necessarily to scale, emphasis instead being placed upon illustrating the principles of the invention. In the figures, like reference numerals designate corresponding parts throughout the different views.
Figure 1 illustrates a perspective view of a parking locator associated with a parking header according to an embodiment of the invention.
Figure 2 illustrates a side perspective view of parking locators associated with a curb according to an embodiment of the invention.
Figures 3A-3E each illustrate a cross sectional view of a parking locator's body according to various embodiments of the invention.
Figure 4 illustrates operation of a parking locator according to an embodiment of the invention.
Figure 5 is a block diagram of a logic device according to an embodiment of the invention.
Figure 6 is a block diagram of a plurality of parking locators connected in a daisy chain according to an embodiment of the invention.
Figure 7 is a block diagram of a parking locator system according to an embodiment of the invention.
Figure 8 is a block diagram of an exchange protocol according to an embodiment of the invention.

### DETAILED DESCRIPTION OF THE PREFERRED EMBODIMENTS

In the following description, numerous specific details are set forth in order to provide a more thorough description of the present invention. It will be apparent, however, to one skilled in the art, that the present invention may be practiced without these specific details. In other instances, well-known features have not been described in detail so as not to obscure the invention.

As will be further described below, the parking locator is generally configured to detect whether a motor vehicle or other object is located within a parking space or other location, and accordingly generate parking information. Parking information as discussed herein comprises information indicating the presence or absence of a vehicle within one or more parking spaces, and/or the location of an object within a space. It is noted that parking information may include details such as the location or identification of specific parking spaces, directions thereto, and other parking related information as well.

The parking locator may notify external devices or user devices whether or not it detects the presence of a motor vehicle in the parking space it is monitoring by communicating parking information to these devices. As discussed herein, an external device may be another parking locator or another component of the invention. An external device may also be a computer or other device capable of receiving parking information and performing operations thereon, such as displaying, analyzing, storing, or forwarding the parking information. A user device may also be a computer or other device capable of receiving parking information and performing operations thereon. Typically, however, a user device differs from an external device in that user devices will generally be used to present or display parking information to a user, such as for example a driver.

Each parking locator may monitor one or more parking spaces, depending on the configuration of its sensors, and may be connected to form a parking locator system capable of detecting the presence of vehicles within one or more parking areas such as but not limited to parking garages, parking lots, or one or more city blocks.

In one or more embodiments, the parking locator may be used with existing or new parking spaces such as those within a parking garage, on a street next to a curb, or located in a parking lot. Of course, the parking locator may be used with any parking space including temporary event parking and parking spaces in both paved and unpaved areas. The parking spaces or locations may or may not be marked. In one or more embodiments, the parking locator may communicate wirelessly which allows parking locators to be easily deployed in various parking areas.

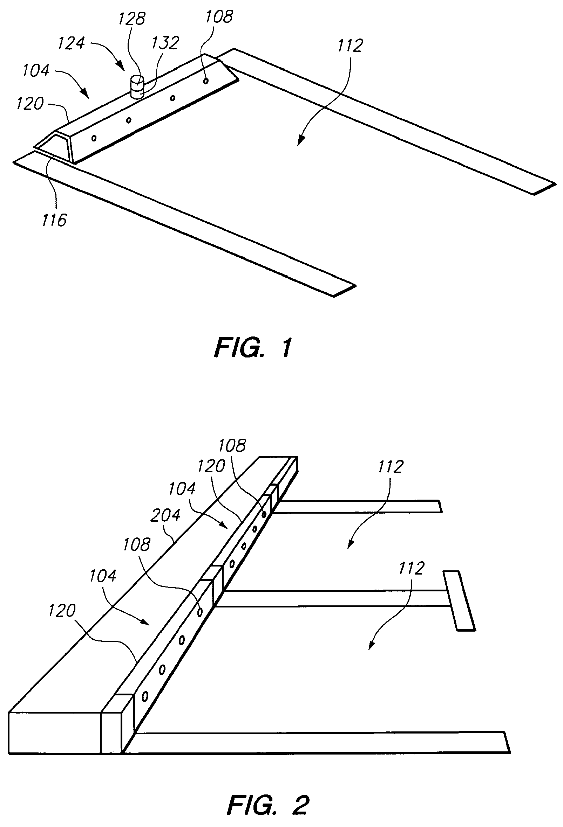

Figures 1 and 2 illustrate various embodiments of the parking locator 104. In Figure 1, the parking locator 104 is associated with a parking space 112 such as those found in parking lots. In Figure 2, the parking locator 104 is associated with curb 204 or street parking spaces 112. Though shown in a specific configuration, it is contemplated that the parking locator 104 may be used with all manner of parking spaces 112 such as but not limited to perpendicular, angled, or parallel parking. In addition, it is contemplated that the parking locator 104 may be configured to account for uncommon, illegal, or improper parking. For example, the parking locator 104 may properly report the presence of a vehicle within a curbside parking space 112 even when one or more wheels of the vehicle are on the curb 204. This type of parking may occur in dense urban areas. The parking locator 104 may also be configured to properly report that a vehicle is illegally or improperly parked such as if a vehicle occupies more than one parking space 112, or if the vehicle is located in a space or location in which parking it not permitted or is time-limited.

The parking locator 104 may include a tower light 124 to indicate if a parking space if occupied or available. For example, the tower light 124 may include a green light or portion 128 and a red light or portion 132 which respectively indicate when a parking space is available or occupied. Of course, additional lights or portions may be provided. In addition, it is contemplated that the tower light 124 may have a single light or portion capable of displaying or emitting multiple colors. The tower light 124 may have other shapes and sizes and may be configured with a speaker system to announce the location of a parking space where a motor vehicle has just parked or just left. In one embodiment, the tower light 124 is mounted on a pole to elevate the tower light so that it may be seen from a distance. The height of the pole may vary according to the situation at hand. For example, the tower light 124 may be mounted at a higher position (i.e. on a taller pole) when in a larger parking lot or area or where it is contemplated that larger vehicles will be parked.

The tower light 124 is advantageous in that it allows open and occupied parking spaces to be easily identified from a distance. Thus, users will not have to drive around a parking area to find an open space. As will be described further below, the tower light 124 may be connected to and controlled by the logic device of the parking locator through one or more electrical, optical, or wireless connections.

In one or more embodiments, the parking locator 104 has a body 120 which may be formed in a variety of different configurations. Generally, the body 120 is a structure which supports the components of the parking locator 104. The body 120 may be configured to be free-standing or self-supporting. In other embodiments, the body is configured to accept or engage another body, such as a parking header 116 or curb 204. In one embodiment, the body 120 is shaped to fit over the edge of a curb 204 on the street as shown in Figure 2 or formed to fit over the top of a parking header 116 such as that shown in Figure 1.

It is contemplated that the body 120 may be flat or planar and attached to the parking space 112 or be mounted in or on the parking space. The body 120 may be manufactured from many different types of material including but not limited to cement, plastic, rubber, metal, stone, composites, and even wood or wood products. A durable material is generally preferred.

It is noted that though generally described herein as fitting over a curb 204 or parking header 116, the parking locator's body 120 may be a solid mass forming the edge of a curb or may be a parking header itself. The body 120 may be mounted to the parking surface or another object by various means, such as adhesive, mechanical fasteners or the like.

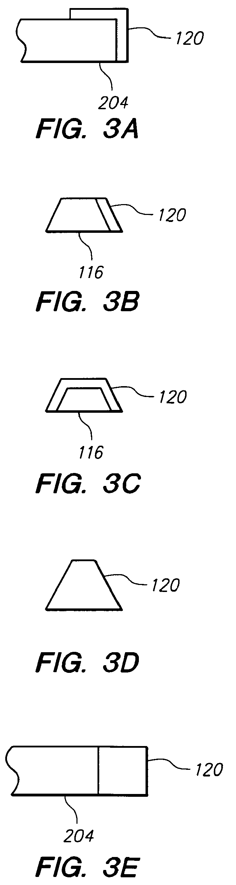

Figures 3A-3C illustrate side views of various embodiments of the parking locator 104 which may fit over curbs 204, parking headers 116, and the like. For example, Figure 3A shows an embodiment where the parking locator 104 is configured to fit over a square curb. Figures 3B-3C shows an embodiment having a body 120 configured to fit over a trapezoidal parking header 116. Of course, the parking locator 104 may be configured to fit over any shape and thus a wide variety of parking locators are contemplated. In addition, the parking locator 104 may be configured to partially or entirely cover various curbs 204, parking headers 116 or other structures as shown, for example, in Figures 3B and 3C respectively.

As stated, it is contemplated that the parking locator 104 may have a planar body 120 such as shown from side view in Figure 3B. In this configuration, the parking locator 104 may be mounted to many different surfaces such as the surface of a curb 204, parking header 116, parking space 112, or even a wall. It is noted that the body 120 of the parking locator 104 may include one or more curves as well to accommodate rounded curbs 204, parking headers 116, or other rounded structures.

Figures 3D and 3E illustrate side views of embodiments of the parking locators 104 having a solid or substantially solid body 120. Generally, these embodiments are meant for stand alone use. For example, in Figure 3D, the body 120 is formed as a parking header 116 and thus the parking locator 104 may be used without requiring an existing parking header. In Figure 3E, the parking locator's body 120 is formed as the edge of a curb 204 rather than formed to cover the curb. It is noted that these embodiments need not be completely solid and thus may have one or more hollow sections such as to save on materials or weight. For example, the body 120 shown in Figure 3D could have one or more holes running along its length to save materials and reduce the weight of the parking locator 104.

In one embodiment, the body of the parking locator may comprise another element, such as a concrete parking stop. In such embodiment, the stop might be modified to accommodate the one or more sensors and/or other components of the parking locator. In addition, the wall of a parking structure, a curb or various other structures might be configured to house, support or contain the various elements of the parking locator.

Referring back to Figures 1 and 2, the parking locator 104 comprises one or more sensors 108 to detect the presence of a motor vehicle in one or more embodiments. The sensors 108 may be secured to the body 120 of the parking locator 104 in various ways. For example, the sensors 108 may be attached to the exterior surface of the body 120 or may be embedded into exterior surface of the body. In some embodiments, the sensors 108 may be embedded or attached such that a portion of each sensor 108 protrudes or is external to the exterior surface of the body 120. In other embodiments, the sensors 108 may be secured internal to the body 120 (i.e. held within the body) such that no portion of a sensor is exposed. It is contemplated that individual sensors 108 may be secured by various structures, mounts, fasteners, adhesives, or a combination thereof. In one embodiment, the sensors 108 may be secured by a rotating or pivoting mount which allows the sensors to be pointed in a particular direction or angle. In addition, different ways of securing a sensor 108, such as those discussed herein, may be used to secure sensors of a single parking locator 104.

One advantage to allowing the sensors 108 to be secured in various ways is that particular sensors may operate better depending on how they have been secured. For example, sensors 108 which utilize electromagnetic or radio frequency energy may be secured within the body 120 of the parking locator 104 because such energy can be detected through the body of the parking locator. In contrast, some acoustic or light sensors 108 may be secured such that a portion of these sensors are exposed to better detect sounds or light.

It is contemplated that in some embodiments, an optically, acoustically, or electromagnetically transparent cover may be used to appropriately protect one or more sensors 108 of the parking locator 104. Other covers may be used as well; however, transparent covers have the advantage of reduced interference with the operation of the sensors 108. Of course, where a sensor 108 is within the body 120 of the parking locator 104 such covers are likely not necessary and thus may not be provided.

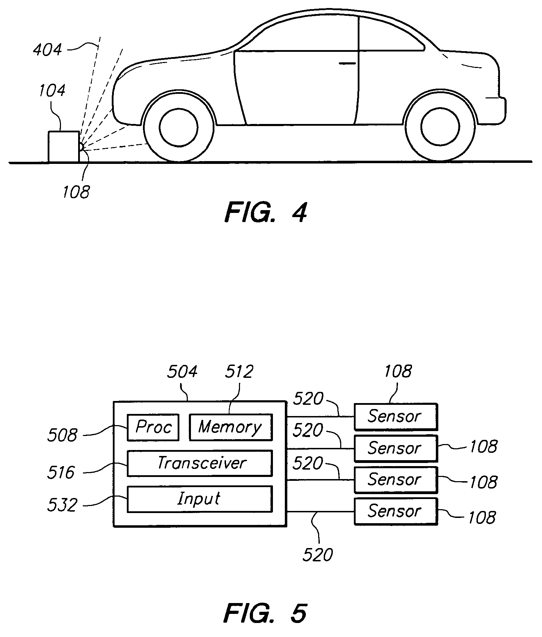

Referring to Figure 4, the sensors 108 may detect the presence of an object within a parking space by emitting one or more detection beams 404 which may comprise acoustic, electromagnetic, radio frequency, or light (including non-visible, such as infrared heat) energy. As will be described further below, a logic device may be used to determine the presence of a motor vehicle within a parking space based on the detection of one or more objects by the sensors 108. Generally, the reflection of a detection beam 404 off an object allows the sensor 108 to detect the object's presence. It is noted that detecting an object includes detecting the presence of a motor vehicle or parts thereof as well as detecting the presence of other physical objects. Though shown as a directed beam, it is noted that the detection beams 404 may be omni directional such as with electromagnetic or radio frequency energy. In addition, one or more of the sensors 108 may be passive sensors which detect vehicles without emitting any detection beams 404.

For example, the sensors 108 may be acoustic sensors which detect the sound of a vehicle, or the sensors may be radio frequency or electromagnetic sensors which detect changes in surrounding radio or electromagnetic energy due to the presence of metals or other materials in a vehicle. The passive sensors 108 may also detect physical contact or movement, such as physical contact with a vehicle or movement of the pavement (including pressure) due to the presence of a vehicle. The passive sensors 108 may also detect the weight of a vehicle in one or more embodiments.

It is contemplated that any type of sensor 108, now known or later developed, which is capable of detecting the presence of an object may be used. In addition, one or more different types of sensors 108 may be used on a single parking locator 104 if desired. The ability to have multiple types of sensors 108 is advantageous in that readings from the various types of sensors may be used to verify the presence of a vehicle such as by comparing the readings from the various sensors. As is known in the art, different types of sensors 108 may have different detection ranges and capabilities and may be chosen to suit different environments, vehicles, or other conditions.

The sensors 108 may be pointed horizontally, such as at a 0 degree angle, or at any other angle to detect a motor vehicle. In a preferred embodiment, the sensors 108 are pointed upward at a 45 degree angle. It is contemplated that the sensors 108 in some embodiments may be adjustable or pivotable to various angles and that each sensor may be pointed at the same or at a different angle than the other sensors of the parking locator 104. As illustrated in the exemplary embodiment of Figure 4, an angle closer to horizontal may be used to detect vehicles parked further away while an angle closer to 45 degrees may be used to detect vehicles parked close to the parking locator 104. It is noted that pointing a sensor 108 at too high an angle may result in its detection beam 404 going over a vehicle causing the vehicle not to be detected, while pointing a sensor at too low an angle may cause the sensor to detect objects or vehicles outside its parking space. Omni directional, non-omni directional, active, and passive sensors 108 may be pointed and adjusted to various angles in one or more embodiments so as to maximize or fine tune the detection capability of the sensors.

Though shown in Figure 4 as detecting a vehicle from the front, it is noted that the parking locator 104 may detect a vehicle at any orientation or angle and that the parking locator's sensors 108 may be selected and pointed based on the orientation or angle of the relevant parking space. For example, a parking locator 104 installed on a curb can detect the presence of a vehicle even though the side of the vehicle rather than the front faces the parking locator. The same may be said for diagonally, illegally, or improperly parked vehicles. This is because the parking locator 104 may be configured to detect the location of portions of a vehicle within a particular space as described below.

Each parking locator 104 may be configured to have more or fewer sensors 108 at various angles and spaced apart at various distances depending on the size, type, shape, or other characteristic of various motor vehicles. For example, more sensors 108 may be included in the parking locator to better detect smaller vehicles such as motorcycles, golf carts, scooters, bicycles, and the like. Additional sensors 108 may also be included to detect vehicles in relatively large spaces. Fewer sensors 108 may be included in the parking locator 104 where larger vehicles such as sedans, trucks, vans and the like are parked.

Sensors 108 may be positioned or spaced along the parking locator 104 in various ways. As shown in Figures 1 and 2, four sensors are positioned such that two sensors 108 are secured on each side of the parking locator 104. Of course, other sensor positions may be utilized as well. For example, in some parking spaces it may be desirable to detect the presence of motor bikes, electric vehicles, golf carts, or other small vehicles which have a smaller total length then the typical motor vehicle (it should be noted that the parking sensor may be utilized to detect a variety of objects, including vehicles as well as other obstructions such as trash bins, or the like, and that the term "vehicle" is not limited to an automobile but may includes bikes, motorcycles, carts and a variety of other movable objects). Thus, the sensors 108 may be placed closer together. Where there is a need to detect medium size or large vehicles, the sensors 108 may be placed further apart.

It is contemplated that the sensors 108 may be positioned (as well as pointed) to detect specific parts of motor vehicles. For example, one or more sensors 108 may be positioned, pointed, or both such that the sensors are better suited to detect the wheels or tires of a vehicle. In this case, the sensors 108 may be spaced closer together corresponding to where the wheels or tires are likely to be located when a vehicle is parked. Of course, the sensors 108 may be configured or positioned to detect other portions of a vehicle.

Each parking locator 104 may be configured by an install technician or others for the number and type of sensors 108 and the position and alignment of the sensors for detection of motor vehicles. For example, sensors 108 may be adjusted, added, or removed by a technician as desired. In addition, sensors 108 may be realigned or replaced to ensure that the parking locator 104 continues to function properly.

In one or more embodiments, a logic device 504 may be provided. Generally the logic device 504 receives sensor information from one or more sensors 108. Sensor information may be thought of as the data or readings that the sensors 108 output. The logic device 504 may then interpret this information to determine whether a motor vehicle is present within a parking space. The presence of a vehicle may then be transmitted as parking information to other devices, drivers, or others.

Though the parking locator and its elements such as but not limited to the logic device, sensors, and processor, are generally described herein as detecting the presence of an object or vehicle, it is noted that the absence of an object or vehicle is also detected by the fact that not detecting an object or vehicle implies that the same is not present or absent. Thus, in some embodiments, the absence of an object or vehicle may be communicated simply by not communicating that an object or vehicle is present. Of course, the absence of a vehicle may be communicated as well. For example, the sensors or logic device of the invention may communicate information indicating the absence of an object or vehicle when an object or vehicle is not detected.

It is noted that the logic device 504 may be configured to communicate the presence of a vehicle even if the vehicle is only partially within a parking space. In one or more embodiments, the logic device 504 may communicate that an obstruction is present if a vehicle or other object is partially within a parking space.

Sensor information may be interpreted by a logic device 504 to determine the presence of a motor vehicle in various ways. For example, if one or more of the sensors 108 detect the presence of an object, the logic device 504 may communicate that there is a vehicle present. Of course, the logic device 504 may be configured to communicate that a vehicle is present if a specific number of sensors detect an object.

The logic device 504 may be held within the parking locator such as for example, within the parking locator's body or beneath the parking locator's body. In this manner, the logic device 504 is protected from the elements, tampering, and from physical damage by the parking locator's body. It is contemplated that one or more covers removably attached to the body or one or more removable portions of the body may be used to allow the logic device 504 to be accessed for maintenance, replacement, adjustment, configuration, or other reasons.

In one embodiment, the parking locator includes at least one transmitter configured to transmit information. In a preferred embodiment, as the exemplary embodiment of Figure 5 shows, the logic device 504 may comprise at least one transceiver 516, as well as one or more sensor inputs 532, one or more processors 508, and one or more memory devices 512. It is noted that a separate memory device 512 may not be required in all embodiments because the processor 508 may have memory or the configuration of the logic device 504 does not require it. In a preferred embodiment, the parking locator comprises a transceiver rather than just a transmitter, thus allowing the two way communications to and from the parking locator. Transmitted information may include parking information including information indicating the presence or absence of a motor vehicle to external devices, as will be described further below. Received information may comprise diagnostic or control instructions.

The transceiver 516 may utilize various communications links communicate, including those now known or later developed. For example, the transceiver 516 may be configured to communicate via a wired communication link comprising a physical cable such as electrical or optical cable. The transceiver 516 may also be configured to communicate via a wireless communication link. Various communications protocols, packet switched, circuit switched, or otherwise, now known or later developed, may be used with the invention as well. In one or more embodiments, the transceiver 516 may communicate via TCP/IP, GPRS, or text messaging.

It is noted that the transceiver 516 may be used to install, configure, and maintain the parking locator in some embodiments. For example, a technician or other personnel may connect to a parking locator through the transceiver 516 to setup or update configuration settings or initiate diagnostics. It is contemplated that this connection may also allow one or more sensors to be turned off (i.e. deactivated), turned on (i.e. activated), calibrated, or adjusted. For example, one or more damaged sensors 108 may be turned off to prevent false readings. In addition, one or more sensors 108 may be calibrated or adjusted such as by increasing or decreasing the strength of their detection beams, if applicable, or by increasing or decreasing their sensitivity. It is noted that this connection allows technicians or other personnel to remotely perform these functions. Of course, these functions may be performed through the transceiver 516 locally as well, such as by connecting a laptop or the like directly to the parking locator.

In some embodiments, the transceiver 516 may be configured to control the tower light 124 illustrated in Figure 1. In these embodiments, the transceiver 516 may be configured to send a signal corresponding to the light, color, or both that should be displayed or emitted by the tower light. It is noted that a separate transceiver 516 or other interface configured to control the tower light may be provided as part of the logic device in one or more embodiments.

One or more sensor inputs 532 or another interface may also be included in the logic device 504. Generally, a sensor input 532 allows data outputted by one or more sensors 108 to be received by the other components of the logic device 504. For example, the sensor input 532 may be a terminal or other connector through which the output leads or connectors 520 of a sensor 108 may be connected. It is contemplated that each sensor input 532 may be selected to correspond to the output of one or more sensors 108. For example, a sensor input 532 may be configured to accept a particular optical or electrical connection from a sensor 108. In some embodiments, the sensor input 532 may be configured to accept wireless transmissions from one or more sensors 108.

In one embodiment, the sensor input 532 may translate data from a sensor 108 from one format or type to another. For example, an optical signal may be translated into an electrical signal, or one data format may be translated into another data format. The advantage of this capability is that a variety of sensor information may be translated by the sensor input 532 so that it is of a format or type that the one or more processors 508 of the logic device 504 can utilize. Of course this is not necessary in all embodiments, as the processor 508 or sensors 108 may be configured such that translation of sensor information is not required.

The one or more processors 508 may be simple electronic circuits or may be a more complex device such as a microprocessor. It is contemplated that any electronic device or component, now known or later developed, capable of receiving and interpreting input from the one or more sensors 108 may be used as a processor 508.

As stated above, the logic device may be configured to determine the presence of a vehicle within a parking space. In one or more embodiments, the one or more processors 508 may be used to make this determination. For example, a processor 508 may interpret sensor information from one or more sensors 108 to determine the presence of a motor vehicle within a parking space. For example, if only one sensor 108 detects the presence of an object, the processor 508 may determine that there may be an obstruction, but that no motor vehicle is present. However, if more than one of the sensors 108 detect the presence of an object, the processor 508 may determine that a motor vehicle is present. In one embodiment, each sensor 108 will detect an object, if such object is present, and the logic device's processor 508 will determine whether the object is a motor vehicle depending on the location of the sensors and the number of sensors detecting an object. It is noted that in some embodiments, the detection of an object by a single sensor 108 may be sufficient for the processor 508 to determine that a vehicle is present.

It is contemplated that the processor 508 may be configured to determine whether a motor vehicle is present in other ways as well. For example, the processor 508 may execute one or more image, sound, or other pattern recognition algorithms on the sensor data to determine the presence or absence of a vehicle. These algorithms may be stored as machine readable code on one or more memory devices 512 of the logic device 504 in one or more embodiments. As stated, memory devices 512 are not necessary in all embodiments because the processor 508 may be configured to perform these algorithms such as in the case of an application specific integrated circuit (ASIC), a field-programmable grid array (FPGA), or other specialized microprocessor.

In one or more embodiments, the one or more memory devices 512 may be used to store data as well. For example, the parking locator's configuration or other settings such as but not limited to its location on the lot, the configuration of its sensors, and its communication settings may be stored on a memory device 512. In addition, a log containing a record of when motor vehicles are present or absent may be stored on a memory device 512. This is advantageous in that this information may be used to plan additional parking capacity, conduct diagnostics on parking locators, or determine the price of parking, among other things.

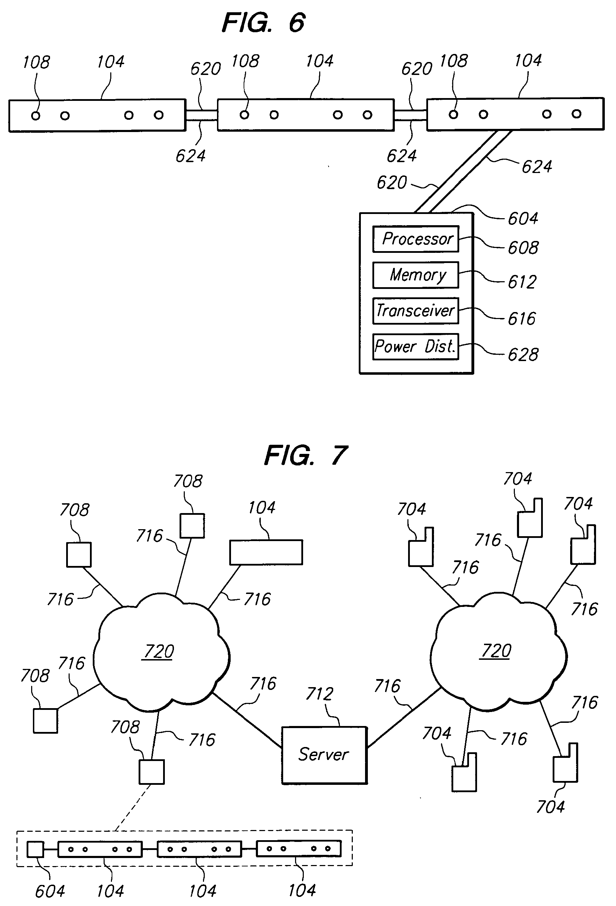

Figure 6 shows a plurality of parking locators 104 connected by power cables 620 and communications cables 624. Generally, the power cables 620 are used to provide power to each parking locator 104 while the communications cables 624 allow each parking locator to transmit data, receive data, or both. It is noted that the power cables 620 and communications cables 624 may be within a single cable having one or more conductors in some embodiments. In addition, it is contemplated that additional cables such as redundant power cables 620 or redundant communications cables 624 may be included in some embodiments as well.

It is contemplated that a power cable 620 may be any cable though which power can be provided to one or more parking locators 104, and that a communications cable 624 may be any cable through which data can be transmitted, received, or both by one or more parking locators 104. In one or more embodiments, the communications cables 624 may be standard network cables such as but not limited to Ethernet, coaxial, or optical cables. It is noted that in embodiments where the parking locator 104 may communicate wirelessly, such as through a wireless transceiver, communications cables 624 may not be provided. It is contemplated that a parking locator 104 may be solar or battery powered in one or more embodiments. In these embodiments, power cables 620 may not be required but may be used to power parking locators 104 if solar or battery power is inadequate.

In the embodiment shown in Figure 6, a plurality of parking locators 104 are connected in a daisy chain configuration wherein the power and data input to a second parking locator is routed from a first apparatus while a third parking locator connects to the power and data output of the second parking locator. Of course, it is contemplated that each parking locator may be directly connected to a power source for power, to an external device to transmit and receive data, or both in one or more embodiments. The number of parking locators 104 that may be connected in a daisy chain may be from 1 to n where n is defined by power and distance. It is preferable to organize the parking locators 104 in clusters associated with a particular location in order to provide the details required by a parking location system.

A control box 604 may be used to facilitate daisy chaining a plurality of parking locators 104 in one or more embodiments. The control box may comprise a power distributor 628 which connects to and sends power from a power source to power the daisy chain of parking locators 104. The power source will typically be an electrical grid however it is contemplated that other power sources such as generators or batteries may be used as well. It is contemplated that the power distributor 628 may be configured to supply power to a particular number of parking locators 104 or a range of a number of parking locators. In one or more embodiments, the power distributor 628 may alter the power from the power source, such as but not limited to converting AC to DC, DC to AC, and increasing or decreasing voltage or current, prior to supplying power to the one or more parking locators 104.

It is contemplated that each or some of the parking locators 104 may be connected to a power source other than the power distributor 628 in some embodiments. For example, each parking locator 104 in a particular parking lot may be plugged into or connect to the electrical grid or other power source.

Generally, the control box 604 is connected to one or more parking locators 104 via one or more communications cables 624 or wirelessly to allow data to be communicated to and from each of the one or more parking locators. It is contemplated that the control box 604 be used to notify one or more drivers, parking attendants, other external or user devices, or people of the presence or absence of a motor vehicle at a particular parking locator. For example, in one or more embodiments, the control box 604 receives data indicating whether a particular parking locator 104 has detected or not detected the presence of a vehicle and communicates the same as parking information to one or more external or user devices.

Typically this occurs by the logic device within a parking locator 104 communicating the parking information comprising information indicating the presence or absence of a vehicle within its associated parking space to the control box 604. Of course, other parking information regarding a parking space may be collected by a parking locator's 104 sensors 108 and communicated to the control box 604 as well. In one embodiment, the parking information provided by a parking locator's 104 logic device may be communicated in the following format:

### <Device Number>,<Status Code>,<Location>

Device Numbers may be numeric or alphanumeric codes which uniquely identify each parking locator 104. Of course, any indicator capable of uniquely identifying a parking locator 104 from a plurality of parking locators may be used as a Device Number. The Location may be a description, geographic coordinates, street name, parking space number, or any other indicator of the parking locator's location. It is noted that Location may not be communicated by a parking locator 104 in all embodiments because a separate record or database of locations indexed by each parking locator's Device Number may be kept and used to retrieve the location of a parking locator. Status codes generally indicate the presence or absence of a vehicle and may include specific information such as but not limited to the following examples:
1. Space Empty
2. Motor Bike Present
3. Small Motor Vehicle Present
4. Motor Vehicle Present
5. Unknown Obstruction Present
6. Apparatus Error
7. Other Status information

The parking information may then be used by the control box 604 to communicate to one or more users or external devices the current status of one or more parking spaces. Communication of the status of particular parking spaces or of vacant parking spaces in an area may occur in various ways. For example, the control box 604 may be connected to a telephone line, the internet, cellular network, one or more displays or signs, or a combination thereof. Users may then call a number or send a request by text message to receive information regarding open or occupied parking spaces or look up this information on the internet or on a sign. It is contemplated that electronic signs may be posted near the entrance to a parking area or other visible area such that users (such as drivers) may easily see which spaces are open or occupied. The sign may direct users to open spaces such as by providing a map or directions to an open space, or by listing a number or other information that identifies the space.

The control box 604 may be configured to communicate parking information to users through one or more user devices of various types. In this manner, a wide variety of communication methods may be used. For example, users could receive notifications via text messaging, instant messaging, telephone calls, email, or a combination thereof on any device capable of displaying the same.

Figure 7 illustrates an embodiment of a parking locator system according to the invention. As shown in Figure 7, the parking locator system is comprised of one or more parking locator clusters 708. As shown, each parking locator cluster 708 comprises one or more parking locators 104 connected in a daisy chain to a control box 604. Each cluster 708 may transmit parking information on a real-time basis to a location server 712 via a network 720. For example, the parking locators or parking locator clusters 708 may continuously transmit parking information to the location server 712. The location server 712, as described further below, may be configured to organize and store the received parking information and provide the parking information to one or more user devices 704.

These transmissions of information may occur via one or more wired or wireless communication links 716 and networks 720 utilizing various communication protocols. It is noted that in some embodiments, parking information may be transmitted when requested by a location server 712 rather than being transmitted on a real-time basis. For example, parking information may be requested by a location server 712 from one or more parking locators 104 or clusters 708 in response to a driver's or other person's request for parking information. Such a request may be made from a user device 704.

Though illustrated as two separate networks 720, it is contemplated that user devices 704, location servers 712, clusters 708, and individual parking locators 104 may communicate through a single network or multiple networks. It is also contemplated that the networks may be of different types. For example, communication may occur over the internet, telephone networks, cellular networks, as well as other wired or wireless networks. The type of network or networks used will depend on the communications requirements used by and with the invention herein.

In one embodiment, the communication between each cluster 708 and the location server 712 is accomplished through wireless communication links 716. In a preferred wireless embodiment, GPRS communication is used to facilitate communication between each cluster 708 and the location server 712. In another embodiment, the communication between each cluster 708 and the location server 712 is accomplished through wired communication links 716. In a preferred wired embodiment, the clusters 708 and the location server 712 communicate via TCP/IP or other internet protocol. In yet another embodiment, individual clusters 708 may communicate via different wired or wireless networks 720 such as GPRS networks, circuit switched networks, or packet switched networks (e.g. internet).

As stated, each cluster 708 comprises one or more parking locators 104 connected in a daisy chain to a control box 604. In this embodiment, each cluster 708 communicates via a communication link 716 through its control box 604. Also shown in Figure 7 is a parking locator 104 configured to communicate directly to a location server 712 through a network 720. For example, the logic device of a parking locator 104 may be configured with an appropriate transceiver to allow direct communication of parking information to a location server 712 if desired.

The location server 712 may compile the collected information on a real-time, periodic, or other basis (e.g. as the information is requested by users) and organize the information based on location and time. This information may then be easily retrieved for users of the system. The location server 712 will typically be a server computer or personal computer having machine readable code configured to perform the functions described herein. However, it is noted that other devices capable of performing the functions herein may also be utilized with the invention.

In one embodiment, the location server 712 utilizes a database to organize and store parking information. The database may include the following data elements:
1) User Accounts to enable system and service access, which includes account type, name and address information, User device type, and user device configuration.
2) Network Configurations which include each parking apparatus, every transmitter device, location within a defined geographical area, and other configuration information
3) Wireless Network Information and Configuration
4) Support Personnel Accounts
5) Parking Device apparatus status
6) User location and status
7) Traffic Alerts
8) Traffic Information
9) City Fees and Payment Repository
10) Connection to financial institutions for payment services
11) Other related information and real-time status

The account information such as User and Support Personnel Accounts may be used to allow or deny access to the information stored in the database. For example, User Accounts may have access to traffic and parking information while Support Personnel Accounts may have access to configuration and status information such as network information.

Thus, it can be seen that the location server 714 is advantageous in that it provides a central storage area, such as the database described above, for parking information. In addition, other related information may be stored and accessed. Further, the location server 714 allows access to such information to be controlled by one or more User, Support Personnel, or other accounts, and provides a single device from which such account holders may access parking and related information. As stated, it is contemplated that the location server 714 may be a computer and thus may be easily programmed to include additional functionality and connected to a wide variety of networks and devices as necessary.

Similar to individual parking locators 104 or groups of parking locators, the parking locator system provides a service to the user that provides the user with available parking space information within a particular location or region. In one embodiment, the user may send a text message (e.g. SMS message from a cell phone) to a specific short code to request the closest available empty parking space from the system. In another embodiment, a user could send a text message to a particular short code assigned to the parking locator system to request all available spaces. It can thus be seen that a variety of text messages may be sent to the parking locator system and that the system may be configured to provide specific information as requested by a particular text message. An example of such text message requests could look as follows:
"Closest Space?" (to request the closest space)
"All Spaces?" (to request all available spaces within an area)

A user may provide his or her current location to the system in the text message or that the user's phone may provide the user's current location. For example, the phone may provide GPS coordinates to the system or the user may enter cross streets, zip codes, coordinates, or other location information in a text message. Such a request could look as follows:
" Closest Space to Main St. and 4th St.?"

In response to a request, the parking locator system may be configured to return a text message to the user, providing driving directions to the open space. For example:
"Space available on 4th St. between Main St. and River St."

The system may be configured to send map or other visual information indicating the location of one or more spots, or such information may be synchronized to a map or other data. For example, the system may send a .jpg map showing streets and the location of open parking spots to a user device, such as a phone, for display.

It is contemplated that the parking locator system may be connected to other user devices such as navigation devices. For example, in-car or handheld GPS/direction systems may be used. The status of parking spaces, preferably open spaces, may then be displayed on a map displayed by the navigation device. In addition, the system may include a GPS system including radio communication and may inform the user specifically about the availability of parking within a specific area. Additional options may include the capability of a GPS enabled user device to also provide integrated information regarding accidents or traffic jams.

It is noted that user devices, which are generally devices capable of displaying or presenting parking information to a user, may be of various types. For example, in addition to cell phones and navigation devices, PDAs, portable media players, electronic signs, portable game machines, internet terminals, and computers may be used to request and view parking information. It is contemplated that these devices may request and display parking information through various interfaces. For example, some user devices may utilize a web interface or other software interface to allow users to make requests of parking information and to display the same to users.

In addition, a tower light, such as described above with respect to Figure 1, may be used to display parking information. In this situation the tower light may be configured as a user device in that the tower light would communicate with or be controlled by a location server or a control box without being connected to a parking locator or any logic device therein. It is contemplated that a tower light may be associated with a parking space rather than attached to the parking locator. For example, the tower light may be attached to the parking space itself or may be mounted on a pole extending upward from the parking space. As stated, such pole may be of varying heights as desired for visibility, aesthetic, or other reasons.

In one or more embodiments, users may be charged for parking information provided by the invention. Many methods for charging the users of the system are possible, including monthly fees, subscriptions, per transaction fees, subsidized by government or advertising, location specific, regional specific, etc... It is noted that any method of accepting payment, now known or later developed may be used with the invention.

In one embodiment, the location server may be configured to collect a fee or payment and check that a user has paid before communicating parking information to the user. Each user may be identified by his or her phone number, a username and password, or other identifying information. It is contemplated that where a location server is not provided, a control box may be configured to collect payment and check that a user has paid before communicating information to the user.

The parking locator system may be configured to support a plurality of financial methods for accessing the system and using the service. For example, in many large cities within Europe, drivers are forced by cities to pay for access to city centers to alleviate environmental problems. A cell phone may be used as an electronic purse communicating to the system using protocols such as GPRS to make payment for access to the city. It is thus contemplated that a cell phone may similarly be used to make payment for access to the parking locator system. Such payment may include a single payment for a single day, multiple days, a month, multiple months, or other time period as desired. Further, as detailed below, payment may also be automated via a vehicle identification system.

In some embodiments, the system may support time based access where the user simply pays for the time in which they are within a city center or other area and wish to use the parking locator system. In other embodiments, subscription based access may be supported where the user of the system pays a monthly fee to utilize the system to access parking information. It is contemplated that the system may allow payments for access to other services the system is capable of providing including but not limited to traffic information and traffic alert services. There may also be a software development kit (SDK) provided for third parties to add additional services or features to the system such as retail shopping information, entertainment information, restaurant information, and special offers and services.

It is contemplated that the system may include identified users and their user information, and identified vehicles and vehicle information. First, vehicles may be identified by one or more identifiers, such as tags. In general, a tag may comprise vehicle identifying information on or associated with a physical medium or device, or otherwise capable of being transmitted or provided to and/or from the vehicle. For example, the vehicle identifying information may be a code or other sequence of information capable of uniquely identifying one or a group of vehicles. Such a vehicle may have a tag comprising one or more barcodes attached thereto. A vehicle may also have an RFID tag attached thereto in one or more embodiments. Other types of tags may also be used. In fact, any device capable of identifying a vehicle to a parking locator may be used. For example, a radio frequency, infrared, acoustic, or other emitter configured to transmit a code or other information identifying a vehicle may be used as a tag.

One or more parking locator sensors may be configured to read these tags to identify a vehicle. Such sensors may include or may be in addition to those described above for detecting the presence of a vehicle in a parking space. Such sensors may also be associated with a parking header or similar mount, or may be separate there from. For example, a sensor may emit a radio frequency signal to read vehicle identifying information from an RFID tag. A sensor may also read vehicle identifying information from a tag by receiving such information without first emitting radio frequency or other signals. It is contemplated that in some embodiments, a vehicle may be detected through detection of a tag alone. Typically however, the parking locators will be capable of detecting the presence of vehicles with or without tags, as in the manners detailed above. Advantageously, however, identification of a particular vehicle (rather than the mere presence of a vehicle) provides various additional advantages, as detailed herein.

Tags may be distributed to users in various ways. In one embodiment, a user may obtain a tag from a designated location such as at a kiosk, vending machine, or office. Of course, tags may be obtained online, through the mail, or by phone, as well as in other ways. Generally, a user will provide user information identifying the user, which information is associated with the tag. Such user information might include one or more of user name, address, phone number, credit card number, drivers license number, and vehicle identification information. In one embodiment, a user may also associate funds with the tag, such as by depositing funds or otherwise providing a method of payment such as cash, check, or a credit card or account number in some embodiments. It is contemplated that a user or other personnel may attach or associate tags to vehicles.

This user information may be stored in a database, such as disclosed above, or in a separate patron database. The database itself may be stored on one or more servers. For example, the database may be stored on one or more location servers of a parking locator system. Once a user's information has been stored in a database and/or pays any required subscription fees, the user may be considered a subscriber of the system and other transactions (such as obtaining other tags) may be associated with that information. Of course, a user may later be asked for a username and password or other identification to verify the user's identity.

It is contemplated that other user information may be stored in the database as well. For example, a user may provide information regarding his or her daily or other commute to and from work or other locations. This information will generally include a starting location and a destination location as well as desired or required times of departure, arrival, or both. In some embodiments, information regarding the route between the starting and destination location may be included.

Once stored in a database, the system of the invention may review the user's commute to automatically provide traffic or parking information to the user. For example, if road work, an accident, construction, or traffic has or is occurring along a user's commute, this information may be automatically communicated to the user, such as through a user device. In addition, parking information identifying one or more unoccupied parking spaces may be automatically communicated to the user. This information may be communicated automatically at or prior to the user's departure or arrival times or may be communicated automatically upon the user's vehicle entering a particular area as determined by a GPS device or other vehicle location system. This information may also be retrieved as desired by a user such as by accessing the information through a user device.

In the database, individual tags may be associated with a particular user's user information. For example, each tag may have an identifier which may be associated with the user's information, or the vehicle identifying information contained on each tag may be associated with the user's information. In this manner the holder or owner of each tag may be later determined. If a tag expires, is damaged, is lost, or otherwise becomes unusable, such tag may be removed from the database or may be marked as no longer in use. Tags may also be marked in the database as suspended such as in the case where a user fails to pay one or more charges. In this manner, the state of issued tags may be managed through the database.

In one or more embodiments, users may elect to have anonymous tags. Generally, anonymous tags will be configured to identify individual or groups of vehicles without identifying or being associated with a user. Such tags may not provide all of the same advantages to a user as a tag which is user identified. However, such a tag may have various of the benefits detailed herein. For example, even though a user is not identified, information may be transmitted to a tagged vehicle regarding traffic, parking or other information.

The ability to identify individual or groups of vehicles provides several advantages. For example, the system may automatically charge an identified vehicle's owner for parking in certain parking spaces or for driving to or through certain areas. This may occur by the parking locator or parking locator system reading the vehicle's tag and using a database to look up the user who holds or owns the tag. The charges may then be charged against deposited funds, or to a bank or credit card associated with the tag. In this manner, a user may be automatically billed or charged for parking, toll roads, or other services. The system may otherwise charge users for various of the services provided thereby, such as for providing parking or traffic information and/or the user networking information detailed below. Such a fee may be, for example, a subscription fee.

It is contemplated that the system may be used to eliminate one or more parking meters or similar devices in this manner. For example, one or more parking spaces, in parking lots, parking garages, or other parking areas may be configured to identify a car by its tag when parked. Rather than requiring a driver or other person to insert a coin or other payment, the system may automatically charge an account associated with the vehicle. It is noted that the account to be charged may be stored in the vehicle's tag in one or more embodiments. In this manner, the account may be charged without the system retrieving the account information from an external database or other data source. The account may be any account that allows funds to be transferred to pay for parking. For example, the account may be a credit card, checking, savings, debit, prepaid, or other account.

Another advantage is that users may establish a social network with other users. For example, users may elect to allow other users to see where their car is parked. In this manner, users may determine if any of their friends or acquaintances are in the same area. In addition, users may make new friends and acquaintances from other users who are in the same area or who frequent the same areas. For example, one or more users who do not know each other may commute to the same place for work or shop at the same place. It is noted that in one or more embodiments, a user may choose which other users may see where their car is parked.

In one embodiment, the system may even analyze parking information to provide offers to users. For example, the system may detect a particular vehicle parked in an area on a regular basis. The system may send a notice to the user that the user could save money by parking in another location.

Users may also elect to allow other users to see their contact information, their commutes, or both in one or more embodiments. In this manner, users may communicate with each other, such as through the phone, instant messaging, online postings, email, or the like. Users may also use this feature to meet new people, to share or arrange commutes or car pools, or both. It is noted that in one or more embodiments, a user may choose which other users may see their contact information.

The parking locator system may include a server to facilitate social networking functions, or an existing server, such as the location server, may be used to facilitate social networking functions. This server may be configured to provide access to user information to one or more users. In one embodiment, the server provides a web interface through which users may see and locate other users, input their commutes and information related to their commutes, as well as communicate with other users such as by posting messages on a bulletin board type system or by sending messages directly to one or more other users. The server may be accessed through one or more user devices. It is contemplated that non-web interfaces may be provided as well. For example, the server may include a voice interface. In addition, an application or software may be configured to access the server as well. For example, a user device such as a GPS device may include software configured to communicate with the server. In this manner, the location of other users' contact information and parking locations may be shown directly on a user device.

In one embodiment, users may be allowed to establish a network of private friends. Each user may establish this network by selecting one or more other users for his or her private network of friends. Within a network, users may share commute information, may see where a friend's car is parked such as to locate a friend, and privately communicate. Users outside a network will typically not be allowed to see the information users have communicated or shared within the network.

It is contemplated that users may use their friend's networks to arrange a commute or car pool with a larger pool of users. For example, users may be allowed to see the commutes of people who are not in their friend network, but are in a friend's friend network. In this manner, shared commutes or car pools may be arranged between people who are known by other people within a user's network rather than between complete strangers. Users may be given discounts or benefits, such as free or discounted parking or reduced subscription fees, for arranging or participating in shared commutes or car pools. As with above, an additional server or an existing server may be used in the parking locator system to facilitate the network of private friends functionality such as by providing a web or other user accessible interface. It is noted that the same server may be used to provide the network of private friends functionality as well as social networking functionality. Of course, separate servers may be used as well.

In one or more embodiments, the parking locator system may provide tools and services to municipalities to ensure better control and better management of parking areas. Control and management may be implemented at a variety of parking areas. For example, there may be different types of parking within the same town or other location, such as "blue area" parking, "rotary" parking, and "mixed" parking. Each type of parking area may have different characteristics.

For instance, parking in a blue area may be regulated in a particular way. In one embodiment, vehicles equipped with a parking disk may be parked in a defined portion of the blue area. The maximum duration for parking may vary between 90 minutes and two hours as set by a municipality or other authority. Of course, other durations may be used. Beyond the authorized period, the vehicle should be moved or face a fine. Blue area parking may be well suited for small and medium sized cities where parking problems don't require the implementation a heavier or more complex system.

Rotary parking may be reserved for shopping zones. In general, parking may be limited to two consecutive hours without the possibility to obtain additional time. For example, a user would be prevented from obtaining another ticket, for additional time, at a ticket machine.

Hourly pricing may vary according to the location of the rotary parking. For example, in a European locality, pricing may vary between one to three Euros per hour (payable per quarter of an hour) according to the district where the parking is located. In one embodiment, residents may be permitted to park at rotary parking areas, but only outside of the paying hours. Various parameters may be taken into account in the configuration of rotary parking areas. For example, price, maximum duration for parking, or parking period (e.g. monthly, daily, hourly) may be taken into account.

Mixed parking generally combines two types of parking, and may occupy residential areas in one or more embodiments. In one embodiment, mixed parking may comprise parking for residents, parking for visitors, or both. To illustrate, in Paris, the price may be 0.5 € per day (2.5 € per week) for district residents holding a resident card. Visitor parking may be treated as rotary are parking. For example, visitor parking may be for two hours maximum at the hourly or other rate for a rotary parking area.

Various parameters may be taken into consideration to define the mixed parking areas. For example, parking for residents may take into account the fare for various durations such as the fare for a day, week, fortnight, or other period. Other parameters may be taken into account as well. For instance, pollution levels may be taken into account. When pollution levels are high, parking fare may be free or zero to encourage drivers not to use their vehicle. Parking for visitors may by defined by parameters such as price, maximum parking duration, parking period (e.g. monthly, daily, hourly), or other parameters.

Better control and better management of parking areas provides numerous benefits. For example, it fosters more rapid rotation and sharing the public space between parked motorists and motorists anxious to park. It should ameliorate circulation conditions and provide better access to the city center. This is currently a problem because of the explosion of the number of vehicles and of the circulation of vehicles while searching for a parking space. For example, in some locations, around 35% of traffic may be related to searching for a place to park.

Better control and management also allows better surveillance of the parking areas for tax and fee collection. In turn, this surveillance facilitates control over parking areas. Currently, the size of parking lots as well as the number of parking spaces may make achieving this objective difficult. According to a study carried out in France for example, only the equivalent of two hours of parking fees/taxes is collected out of a possible eight or nine hours.

Increased collection of fees/taxes provides the benefit of increased revenue. In fact, this increase may allow self-financing of a parking locator system, which is a highly desirable advantage for many municipalities. In fact, the collected revenues may be linked to parking construction and therefore increase the places to offer to the population for parking.

Use of the parking locator system also protects public spaces by helping to prevent unauthorized or illegal parking at empty public spaces that may not be designated for vehicle parking. Currently, this is a problem because of an explosion in the number of vehicles as well as a shortage in parking spaces. This uncontrolled and unauthorized parking is a serious problem which tremendously disrupts traffic circulation.

In one or more embodiments, the better control and management of parking spaces, dissuading users from cheating, increased parking revenue collections, and optimizing the parking agent's work in parking tax settlement described herein may be provided as a park payment control service. It is contemplated that the park payment control service may be implemented using the parking locator system described herein.

The park payment control service will not only help ensure control of different types of existing parking but also create new parking more in keeping with the current environmental constraints (blocking in the city centre, environment, etc...). The idea is to do contradictory control between the payments made and actual parking duration. In case an anomaly is detected, the service may automatically inform parking agents so they may intervene.

In one or more embodiments, the park payment control service may be configured to ensure drivers respect parking rules by ensuring coherence between the defined parking rules for the area, the parking duration, and the collected amounts. The service may utilize hardware or equipment comprising a communication interface in order to collect the information related to user payments. The hardware or equipment may execute machine readable code having instructions to provide aspects of the park payment control service. The instructions may be stored on a memory device or hardwired into the hardware or equipment itself. In one or more embodiments, the hardware or equipment may be one or more components of a parking locator system as described herein.

In some embodiments, the service utilizes a communications interface to allow communication between parking meters/ticket machines and an interface card. The interface card may be in a server or other component of a parking locator system. In order to minimize the modifications at the parking meters/ticket machines, the communication method used may be a master/slave type communications scheme.

In operation, the parking meters/ticket machines may send a message to the interface card each time a user pays its parking right. The control service may then monitor parking according to parking rules, notifying parking agents of anomalies or violations. Notification may occur electronically such as through audio, text or other message. In one embodiment, a parking agent may receive notifications on his or her Pocket PC.

In order to ensure the information exchange between the peripherals and the interface card, an exchange protocol or data format may be defined. For example,

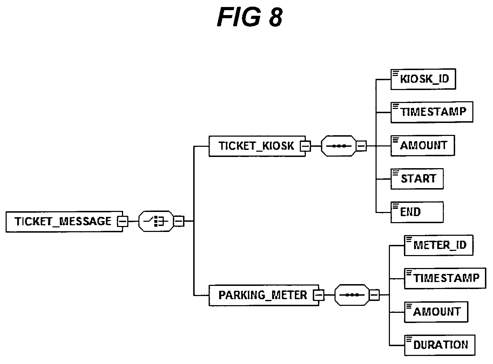

Figure 8 illustrates and exemplary XML descriptor for the exchange of information. As can be seen, the XML descriptor defines messages available according to the type of peripheral. It will be understood that various exchange protocols or data formats may be used to communicate information as well.

The parking meter/ticket machine connection to the parking locator system offers real time management and enhances the management of:
- The rise in real time of the turnover
- Monitoring of the ticket machines for various conditions
   o Paper low
   o Currency full
   o Loss of connection
   o Malfunction
   o Ticket machine version

It is contemplated that the park payment control service may be implemented in one or more portions or modules. For instance, a business rules engine may be used to control the coherence between the parking duration, the payments made, and the parking rules. A group management module configured to better locate vehicles not respecting the parking rules (it is the case of ticket machines) may be provided as well. One or more alarms may be set off and notification to the agents in charge of controlling the parking payment may be given in some embodiments. These modules may be implemented as machine readable code in one or more embodiments. The modules may also be hardwired into the hardware of a parking locator system as well.

This control module is decentralized at the interface board level of the parking locator network in order to minimize the traffic at the network level. In some embodiments, each ticket machine may manage between 50 to 100 parking lots. In this manner, the lot processing is more rapid and requires less power than if it was done at the server level. Moreover in some cases, it is desirable to be able to install the interface board in the ticket machine itself.

The business rule engine may execute one or more execution rules in a production environment. The execution rules may be based on a legal jurisdiction, a business policy or other sources.

The terms of control may vary according to the parking types as discussed above. In one or more embodiments, the business rules engine may be in charge of defining and implementing terms of control and ensuring that they are being respected. The following illustrates exemplary terms of control for different parking types.
- The Blue Areas:
   ∘ Control of arrivals and departures
   ∘ Alarms in case of exceeding the authorized time
- Rotary parking
   o Control of arrivals and departures
   o Alarm set off if the taking a ticket is not done within a predetermined number of minutes
   o Comparing the departures to tickets
   ∘ Alarms in case of exceeding the authorized time
      ▪ Link between the tickets time and the parking time
      ■ Exceeding the maximum time for authorized parking
- Resident parking
   ∘ Validation of the parking subscriber
      ▪ Online control of the subscription validity (duration)
      ▪ Control of the subscriber's use within the geographic area
      ▪ Freezing the place while it is occupied
      ▪ Releasing the place once the car leaves it

It is noted that the terms of control or rules may be independent of the applications or modules which execute the terms of control or rules. In other words the terms of control or rules may be externalized from the business rules engine or other module of the service. This allows easy modification of the terms of control or rules when desired.

In one or more embodiments, the business rules engine may be defined as follows.
- Controlling the coherence between active tickets and occupied places. Their number should be always equal.
- If there are fewer tickets than occupied places, the service does not need to pick up tickets when a vehicle leaves.
- Arrival of a vehicle on a parking place. Timeout of a predetermined number of minutes to buy a ticket may be provided. If no ticket is issued, then an alarm is set off.
- Exceeding the legal duration of parking may cause an alarm to be set off.
- When a car leaves the parking, the service may cancel the ticket which may or may not have a small amount of time remaining.
- In case of an alarm,
   o Fine: takes out the space from the control process till the departure of a vehicle occupying the place
   o Possibility of reactivating an alarm for having exceeded the legal authorized duration
   o Identification of the parking lots thanks to the number positioned at the level of the parking lots
- In case of a booking without alarm, a parking agent may notify the system which cancels the ticket with the shortest remaining duration possible if the number of tickets is equivalent to the number of occupied spaces.
- If a ticket expires and the vehicle is not moving, an alarm may be set off.
- Adding a ticket without moving the car, replacement of a ticket which duration is close to the expiration or cancellation of an alarm for less than 5 minutes.

In the case of parking management through a ticket machine, the issued tickets may be associated to an area and to a vehicle but not to a parking space, defined as it is the case by the ticket machine. To detect parking anomalies or violations, the number of issued tickets for an area may be monitored or recorded. Even if it is possible to detect anomalies, the investigation area can be important according to the number of parking spaces associated to the ticket machine.

In general, a ticket machine ensures the management of 50-100 parking spaces. This number is understandable since this solution forces the users to move as far as the kiosk. Of course, a ticket machine may ensure management of fewer or more parking spaces. It is noted that due to the privacy law in force in many countries, the system may be anonymous in one or more embodiments.

Some ticket machines of time stamp ask the users during the payment to enter the parking space (or parking lot) number over which his or her car is parked. In that context, the system should control the coherence between the time paid and the time during which the parking lot or space has been occupied:
- If the parking duration exceeds the amount paid, an agent may be notified through an alarm message.
- If the user leaves the parking lot before the end of the parking duration, the meter may be cleared and this constitutes a profit for the parking operator.

In some embodiments, in order to facilitate the parking agents' work by reducing their intervention area and optimizing their progress within the area to be controlled, it may be necessary to define the groups of vehicles. A group of vehicles is defined as a set of vehicles which come to park in a parking area for a period of time. The period of time may be defined in a parameter stored in the memory or hardwired into the parking locator system. If many vehicles come to park in the interval defined by this parameter, it may be difficult to associate the tickets to a parking space. The notion of groups of vehicles allows for automatic creation of a link between the tickets and the parking spaces which have just been occupied.

As soon as a parking space is occupied, the space used (group of captors) is linked to a group in progress. If no group is active, a new group is created and it will be active during the period of time defined by the parameter. A group can be made of only one vehicle if there is only one which has come to park in the area during the period of time defined by the parameter. The notion of groups allows reducing the search zone during the anomaly detection. More precisely, when there is no car movement and a ticket comes to its end, the cars which belong to the related group of cars and the ticket are first targeted.

A group of vehicles may be closed when the period of time defined by the parameter comes to an end. No additional parking spaces may be added to this group after it has closed. If the number of tickets is insufficient within the group (e.g. one or more users haven't been issued a ticket at the ticket machines) an alarm may be set off at the group level. The arrival order of vehicles could be then indicated/used to refine the fraud localization.

Even though it may not be possible to add parking places to a validated group, the group will evolve according to possible departures (places which are freed). The group may be destroyed when all the spaces, of which the group is made of, are freed. If a space is freed and occupied again, it may be allocated to another group, unless it is re-occupied before the period of time defined by the parameter has expired.

The implementation of these groups associated to business rules engine allows for the creation of different types of alarms. For example:
- Alarm of place: the parking duration is too long for a given place
- Alarm of group: there are not enough tickets issued in a given time for a group of occupied places.
- Alarm of area: exceeding the parking duration in regards to issued tickets (control can be done in a global way or within groups - which can allow a better search direction for unauthorized parking)

It is contemplated that the parking locator system may enable the registration of parking agents' control (time input indicated on the ticket). This would allow refining the control algorithms and targeting better the area/group alarms. When an Agent is notified by an alarm message, he has the possibility during the control to freeze the parking lot till the car leaves the parking lot. So thus, it is not taken into account in the control process till the parking lot is vacant again.

While various embodiments of the invention have been described, it will be apparent to those of ordinary skill in the art that many more embodiments and implementations are possible that are within the scope of this invention which is defined by the claims.

## Claims

1. A parking locator system comprising:
one or more storage devices configured to store user information regarding a plurality of parking locator system users;
a plurality of parking locators (104) corresponding to a plurality of parking spaces, said plurality of parking locators (104) configured to generate parking space information regarding a status of one or more parking spaces as occupied or unoccupied;
a plurality of transceivers configured to communicate said parking space information from said plurality of parking locators (104); and
one or more servers (712) configured to:
a) receive said parking information from said plurality of parking locators (104) and to utilize user information regarding a parking locator system user stored at said one or more storage devices to generate and transmit parking information to a user device (704) of said parking locator system user, said parking information comprising information regarding available parking spaces at a destination location of said parking locator system user,
**characterised in that** the one or more servers (712) are further configured to:
b) receive commute information including a starting location, a destination location and times of departure from the parking locator system user;
c) receive input from the parking locating system user designating other parking locator system users allowed to be informed about a location where a car of the parking locator system user is parked; and
d) output to at least one of the other parking system users the location where the car is parked and the commute information of the parking locator system user.

2. The parking locator system of Claim 1, wherein said one or more servers (712) are configured to receive said destination location from said parking locator system user.

3. The parking locator system of Claim 1, wherein said destination location is stored as part of said user information regarding said plurality of parking locator system users.

4. The parking locator system of Claim 1, wherein said one or more servers (712) are configured to receive an arrival time for said parking locator system user, whereby said one or more servers (712) transmit said parking information at or prior to said arrival time.

5. The parking locator system of Claim 1, wherein the parking locator system is capable of detecting the presence of vehicles within one or more parking areas selected from the group consisting of parking garages, parking lots and one or more city blocks.

6. The parking locator system of Claim 1, further comprising:
a plurality of identification tags having an associated tag identifier;
wherein said user information regarding said plurality of parking locator system users is retrievable utilizing said tag identifier of an identification tag associated with one or more of said plurality of parking locator system users;
wherein said plurality of parking locators (104) are configured to wirelessly read said tag identifier of said plurality of identification tags and transmit said tag identifier to said one or more servers (712); and
wherein said one or more servers (712) are configured to receive said tag identifier and retrieve said user information corresponding to said tag identifier from said one or more storage devices to charge a parking fee to one or more of said plurality of parking locator system users identified by said user information corresponding to said tag identifier.

7. The parking locator system of Claim 6, wherein said user information identifies one or more of said plurality of parking locator system users as friends, whereby said one or more servers (712) are configured to receive said tag identifier corresponding to one or more of said friends and to notify said parking locator system user where one or more of said friends are parked.

8. The parking locator system of Claim 6, wherein said one or more parking locators (104) are configured to generate and transmit parking space information regarding a status of one or more parking spaces as occupied or unoccupied, whereby said one or more servers (712) receive said parking space information to generate and provide parking information comprising information regarding available parking spaces in response to a request by one or more of said plurality of parking locator system users.

9. The parking locator system of Claim 8, wherein said user information includes a driving destination for at least one of said plurality of parking locator system users, wherein said one or more servers (712) are configured to automatically provide said parking information for one or more parking spaces at said driving destination to said one or more of said plurality of parking locator system users.

10. The parking locator system of Claim 6, further comprising one or more tag distributors configured to provide said plurality of identification tags to said plurality of identification tag users, said one or more tag distributors selected from the group consisting of parking kiosks and vending machines.

## Patentansprüche

1. Parkpositionsgebersystem, umfassend:
ein oder mehrere Speichervorrichtungen, die konfiguriert sind, um Benutzerinformationen bezüglich einer Vielzahl von Parkpositionsgebersystem-Benutzern zu speichern,
eine Vielzahl von Parkpositionsgebern (104) entsprechend einer Vielzahl von Parkplätzen, wobei die Vielzahl der Parkpositionsgeber (104) konfiguriert ist, um Parkplatzinformationen bezüglich des Status eines oder mehrerer Parkplätze als belegt oder nicht belegt zu erzeugen,
eine Vielzahl von Sende-Empfangs-Geräten, die konfiguriert sind, um die Parkplatzinformationen von der Vielzahl der Parkpositionsgeber (104) zu kommunizieren,
und einen oder mehrere Server (712), die konfiguriert sind,
a) um die Parkinformationen von der Vielzahl der Parkpositionsgeber (104) zu empfangen und die Benutzerinformationen bezüglich eines in der einen oder den mehreren Speichervorrichtungen gespeicherten Parkpositionsgebersystem-Benutzers zur Erzeugung und Übertragung von Parkinformationen zu einer Benutzervorrichtung (704) des Parkpositionsgebersystem-Benutzers heranzuziehen, wobei die Parkinformationen Informationen bezüglich verfügbarer Parkplätze an einem Zielplatz des Parkpositionsgebersystem-Benutzers umfassen, **dadurch gekennzeichnet, dass** der eine oder die mehreren Server (712) ferner konfiguriert ist/sind,
b) um Pendelinformationen zu empfangen, die einen Ausgangsplatz, einen Zielplatz und Zeiten des Verlassens des Parkpositionsgebersystem-Benutzers enthalten,
c) um eine Eingabe von dem Parkpositionsgebersystem-Benutzer zu empfangen, welche andere Parkpositionsgeber-Benutzer bezeichnet, denen gestattet ist, über einen Platz informiert zu werden, wo ein Fahrzeug des Parkpositionsgebersystem-Benutzers geparkt ist, und
d) um an den zumindest einen der anderen Parksystem-Benutzer den Platz, wo das Fahrzeug geparkt ist, und die Pendelinformation des Parkpositionsgebersystem-Benutzers abzugeben.

2. Parkpositionsgebersystem nach Anspruch 1, wobei der eine oder die mehreren Server (712) konfiguriert ist/sind, um den Zielort von dem Parkpositionsgebersystem-Benutzer zu empfangen.

3. Parkpositionsgebersystem nach Anspruch 1, wobei der Zielart als Teil der Benutzerinformationen bezüglich der Vielzahl von Parkpositionsgebersystem-Benutzern gespeichert wird.

4. Parkpositionsgebersystem nach Anspruch 1, wobei der eine oder die mehreren Server (712) konfiguriert ist/sind, um eine Ankunftszeit für den Parkpositionsgebersystem-Benutzer zu empfangen, wobei der eine oder die mehreren Server (712) die Parkinformation zu oder vor der Ankunftszeit überträgt/übertragen.

5. Parkpositionsgebersystem nach Anspruch 1, wobei das Parkpositionsgebersystem imstande ist, das Vorhandensein von Fahrzeugen innerhalb eines oder mehrerer Parkbereiche zu detektieren, die aus der Gruppe ausgewählt sind, bestehend aus Parkgaragen, Parkplätzen und einem oder mehreren Baublöcken.

6. Parkpositionsgebersystem nach Anspruch 1, ferner umfassend:
eine Vielzahl von Identifizierungskennzeichen, die eine zugehörige Kennzeichenkennung aufweisen,
wobei die Benutzerinformationen bezüglich der Vielzahl von Parkpositionsgebersystem-Benutzern unter Heranziehung der Kennzeichenkennung eines Identifizierungskennzeichens wieder auffindbar sind, welches einem oder mehreren der Vielzahl von Parkpositionsgebersystem-Benutzern zugehörig ist,
wobei die Vielzahl von Parkpositionsgebern (104) konfiguriert ist, um die Kennzeichenkennung der Vielzahl der Identifizierungskennzeichen drahtlos zu lesen und die Kennzeichenkennung zu dem einen oder den mehreren Servern (712) zu übertragen,
und wobei der eine oder die mehreren Server (712) konfiguriert ist/sind, um die Kennzeichenkennung zu empfangen und die Benutzerinformation entsprechend der Kennzeichenkennung aus der einen oder den mehreren Speichervorrichtungen abzurufen, um eine Parkgebühr für einen oder mehrere der Vielzahl der Parkpositionsgebersystem-Benutzer zu berechnen, die durch die der Kennzeichenkennung entsprechende Benutzerinformation identifiziert sind.

7. Parkpositionsgebersystem nach Anspruch 6, wobei die Benutzerinformation einen oder mehrere der Vielzahl der Parkpositionsgebersystem-Benutzer als Bekannte identifiziert, wobei der eine oder die mehreren Server (72) konfiguriert ist/sind, um die einem oder mehreren der Bekannten entsprechende Kennzeichenkennung zu empfangen und dem Parkpositionsgebersystem-Benutzer zu melden, wo einer oder mehrere der Bekannten geparkt hat/haben.

8. Parkpositionsgebersystem nach Anspruch 6, wobei der eine oder die mehreren Parkpositionsgeber (104) konfiguriert ist/sind, um Parkplatzinformationen bezüglich eines Status eines oder mehrerer Parkplätze als belegt oder nicht belegt zu erzeugen und zu übertragen, wobei der eine oder die mehreren Server (712) die Parkplatzinformation empfängt/empfangen, um Parkinformationen zu erzeugen und bereitzustellen, die eine Informationen bezüglich verfügbarer Parkplätze auf eine Anforderung von einem oder mehreren der Vielzahl der Parkpositionsgebersystem-Benutzer umfasst.

9. Parkpositionsgebersystem nach Anspruch 8, wobei die Benutzerinformation ein Fahrziel für zumindest einen der Vielzahl der Parkpositionsgebersystem-Benutzer enthält, wobei der eine oder die mehreren Server (712) konfiguriert ist/sind, um die Parkinformationen über einen oder mehrere Parkplätze an dem Fahrziel dem einen oder den mehreren der Vielzahl der Parkpositionsgebersystem-Benutzer automatisch bereitzustellen.

10. Parkpositionsgebersystem nach Anspruch 6, ferner umfassend ein oder mehrere Kennzeichenverteiler, die konfiguriert sind, um die Vielzahl von Identifizierungskennzeichen an die Vielzahl von Identifizierungskennzeichen-Benutzern bereitzustellen, wobei der eine oder die mehreren Kennzeichenverteiler aus der Gruppe ausgewählt ist/sind, die aus Parkkiosken und Verkaufsautomaten besteht.

## Revendications

1. Système de localisateur de parking comprenant :
un ou plusieurs dispositifs de mémorisation configurés pour mémoriser des informations d'utilisateurs concernant une pluralité d'utilisateurs de système de localisateur de parking :
une pluralité de localisateurs de parking (104) correspondant à une pluralité d'espaces de parking, ladite pluralité de localisateurs de parking (104) étant configurés pour générer des informations d'espaces de parking concernant un état d'un ou plusieurs espaces de parking comme occupés ou inoccupés;
une pluralité d'émetteurs-récepteurs configurés pour communiquer lesdites informations d'espaces de parking à partir de ladite pluralité de localisateurs de parking (104); et
un ou plusieurs serveurs (712) configurés pour:
a) recevoir lesdites informations de parking en provenance de ladite pluralité de localisateurs de parking (104) et pour utiliser des informations d'utilisateurs concernant un utilisateur de système de localisateur de parking mémorisées au niveau desdits un ou plusieurs dispositifs de mémorisation pour générer et transmettre des informations de parking à un dispositif d'utilisateur (704) dudit utilisateur de système de localisateur de parking, lesdites informations de parking comprenant des informations concernant des espaces de parking disponibles au niveau d'une localisation de destination dudit utilisateur de système de localisateur de parking,
**caractérisé en ce que** les un ou plusieurs serveurs (712) sont en outre configurés pour :
b) recevoir des informations de trajet quotidien incluant une localisation de départ, une localisation de destination et des heures de départ en provenance de l'utilisateur de système de localisateur de parking;
c) recevoir une entrée de l'utilisateur de système de localisation de parking désignant d'autres utilisateurs de système de localisateur de parking autorisés à être informés d'une localisation où une voiture de l'utilisateur de système de localisateur de parking est stationnée; et
d) fournir en sortie vers au moins un des autres utilisateurs de système de parking la localisation de l'endroit où la voiture est stationnée et les informations de trajet quotidien de l'utilisateur de système de localisateur de parking.

2. Système de localisateur de parking selon la revendication 1, dans lequel lesdits un ou plusieurs serveurs (712) sont configurés pour recevoir ladite localisation de destination en provenance dudit utilisateur de système de localisateur de parking.

3. Système de localisateur de parking selon la revendication 1, dans lequel ladite localisation de destination est mémorisée comme une partie desdites informations d'utilisateurs concernant ladite pluralité d'utilisateurs de système de localisateur de parking.

4. Système de localisateur de parking selon la revendication 1, dans lequel lesdits un ou plusieurs serveurs (712) sont configurés pour recevoir une heure d'arrivée pour ledit utilisateur de système de localisateur de parking, grâce à quoi lesdits un ou plusieurs serveurs (712) transmettent lesdites informations de parking à ladite heure d'arrivée ou avant.

5. Système de localisateur de parking selon la revendication 1, dans lequel le système de localisateur de parking est capable de détecter la présence de véhicules dans une ou plusieurs zones de parking sélectionnées à partir du groupe constitué de garages de parking, de lots de parking et d'un ou plusieurs pâtés de maisons.

6. Système de localisateur de parking selon la revendication 1, comprenant en outre :
une pluralité d'étiquettes d'identification ayant un identificateur d'étiquette associé;
dans lequel lesdites informations d'utilisateurs concernant ladite pluralité d'utilisateurs de système de localisateur de parking peuvent être récupérées en utilisant ledit identificateur d'étiquette d'une étiquette d'identification associée à un ou plusieurs utilisateurs de ladite pluralité d'utilisateurs de système de localisateur de parking;
dans lequel ladite pluralité de localisateurs de parking (104) sont configurés pour lire de manière sans fil ledit identificateur d'étiquette de ladite pluralité d'étiquettes d'identification et transmettre ledit identificateur d'étiquette auxdits un ou plusieurs serveurs (712) ; et
dans lequel lesdits un ou plusieurs serveurs (712) sont configurés pour recevoir ledit identificateur d'étiquette et récupérer lesdites informations d'utilisateurs correspondant audit identificateur d'étiquette à partir desdits un ou plusieurs dispositifs de mémorisation pour facturer des frais de parking à un ou plusieurs utilisateurs de ladite pluralité d'utilisateurs de système de localisateur de parking identifiés par lesdites informations d'utilisateurs correspondant audit identificateur d'étiquette.

7. Système de localisateur de parking selon la revendication 6, dans lequel lesdites informations d'utilisateurs identifient un ou plusieurs utilisateurs de ladite pluralité d'utilisateurs de système de localisateur de parking comme des amis, grâce à quoi lesdits un ou plusieurs serveurs (712) sont configurés pour recevoir ledit identificateur d'étiquette correspondant à un ou plusieurs desdits amis et pour notifier audit utilisateur de système de localisateur de parking où les un ou plusieurs desdits amis sont stationnés.

8. Système de localisateur de parking selon la revendication 6, dans lequel lesdits un ou plusieurs localisateurs de parking (104) sont configurés pour générer et transmettre des informations d'espaces de parking concernant un état d'un ou plusieurs espaces de parking comme occupés ou inoccupés, grâce à quoi lesdits un ou plusieurs serveurs (712) reçoivent lesdites informations d'espaces de parking pour générer et fournir des informations de parking comprenant des informations concernant des espaces de parking disponibles en réponse à une demande par un ou plusieurs utilisateurs de ladite pluralité d'utilisateurs de système de localisateur de parking.

9. Système de localisateur de parking selon la revendication 8, dans lequel lesdites informations d'utilisateurs incluent une destination de conduite pour au moins un utilisateur de ladite pluralité d'utilisateurs de systèmes de localisateur de parking, dans lequel lesdits un ou plusieurs serveurs (712) sont configurés pour fournir automatiquement lesdites informations de parking pour un ou plusieurs espaces de parking au niveau de ladite destination de conduite audit un ou plusieurs utilisateurs de ladite pluralité d'utilisateurs de système de localisateur de parking.

10. Système de localisateur de parking selon la revendication 6, comprenant en outre un ou plusieurs distributeurs d'étiquettes configurés pour fournir ladite pluralité d'étiquettes d'identification à ladite pluralité d'utilisateurs d'étiquettes d'identification, lesdits un ou plusieurs distributeurs d'étiquettes étant sélectionnés à partir du groupe constitué de kiosques de parking et de distributeurs automatiques.
